# EUROPÄISCHE PATENTSCHRIFT

(11) **EP 1 957 838 B1**
(45) Veröffentlichungstag und Bekanntmachung des Hinweises auf die Patenterteilung: **16.02.2011**
(21) Anmeldenummer: 06829307.5
(22) Anmeldetag: 05.12.2006
(51) Int. Cl.: F16K 15/06

(54) **RÜCKSCHLAGVENTIL**
NON-RETURN VALVE
SOUPAPE ANTI-RETOUR

(30) Priorität: 09.12.2005 DE 102005059318
(43) Veröffentlichungstag der Anmeldung: 20.08.2008
(73) Patentinhaber: RITAG Ritterhuder Armaturen GmbH & Co. Armaturenwerk KG, 27711 Osterholz-Scharmbeck (DE)
(72) Erfinder: GELLWEILER, Thomas, 27711 Osterholz-Scharmbeck (DE)
(74) Vertreter: Ellberg, Nils
(86) Internationale Anmeldenummer: PCT/EP2006/011663
(87) Internationale Veröffentlichungsnummer: WO 2007/065630

(56) Entgegenhaltungen:
- EP-A2- 1 329 657
- DE-A1-102004 006 632
- DE-U1- 8 703 945
- DE-U1- 8 706 470
- GB-A- 2 117 091
- GB-A- 2 408 561
- US-A- 3 937 249
- US-A- 4 203 466
- US-A- 4 368 756
- US-A1- 2003 213 479

## Beschreibung

Die Erfindung betrifft eine Vorrichtung zum Sperren des Durchflusses in Rohrleitungen, Schläuchen oder dergleichen, insbesondere ein Rückschlagventil, mit einem Gehäuse zum Einbau in eine Rohrleitung oder dergleichen, wobei das Gehäuse einen Durchflusskanal aufweist, dessen durchströmter Querschnitt durch ein Ventil verschließbar ist, wobei das Ventil einen Ventilteller zum Verschließen des Querschnitts und einen Ventilschaft zur Führung des Ventils aufweist und wobei das Ventil mittels des Ventilschafts in einer Halteplatte, verschieblich in Strömungsrichtung gelagert ist, wobei die Halteplatte und/oder das Ventil Mittel zur Vermeidung von Rückständen eines in der Rohrleitung transportierten Mediums aufweist und der Ventilschaft in einer vorzugsweise zentralen Bohrung in der Halteplatte verschieblich gelagert ist, wobei auf einer entgegen der Durchflussrichtung weisenden Vorderseite der Halteplatte wenigstens eine Vertiefung zur Verhinderung von Rückständen derart ausgebildet ist, dass das Medium über die Vertiefungen in Richtung der zentralen Bohrung ableitbar ist wobei die Halteplatte einen äußeren Montagebereich und einen inneren die Bohrung aufweisenden Stützbereich aufweist, wobei der Montagebereich und der Stützbereich durch Stege miteinander verbunden sind und wobei die Vertiefungen im Bereich der Vorderseite der Stege und/oder des Stützbereichs ausgebildet sind und in den Bereich der Bohrung führen gemäß dem Oberbegriff des Anspruchs 1.

Eine derartige Vorrichtung ist aus der US 4,203,466 bekannt. Das Dokument offenbart ein Rückschlagventil mit einem Gehäuse zum Einbau in eine Rohrleitung oder dergleichen, wobei das Gehäuse einen Durchflusskanal aufweist, dessen durchströmter Querschnitt durch ein Ventil verschließbar ist, wobei das Ventil einen Ventilteller zum Verschließen des Querschnitts und einen Ventilschaft zur Führung des Ventils aufweist und wobei das Ventil mittels des Ventilschafts in einem Haltemittel, insbesondere einer Halteplatte, verschieblich in Strömungsrichtung gelagert ist, wobei das Haltemittel und/oder das Ventil Mittel zur Vermeidung von Rückständen eines in der Rohrleitung transportierten Mediums aufweist und der Ventilschaft in einer vorzugsweise zentralen Bohrung in der Halteplatte verschieblich gelagert ist, wobei auf einer entgegen der Durchflussrichtung weisenden Vorderseite der Halteplatte wenigstens eine Vertiefung zur Verhinderung von Rückständen derart ausgebildet ist, dass das Medium über die Vertiefungen in Richtung der zentralen Bohrung ableitbar ist wobei die Halteplatte einen äußeren Montagebereich und einen inneren die Bohrung aufweisenden Stützbereich aufweist, wobei der Montagebereich und der Stützbereich durch Stege miteinander verbunden sind und wobei die Vertiefungen im Bereich der Vorderseite der Stege und/oder des Stützbereichs ausgebildet sind und in den Bereich der Bohrung führen.

Weiterhin sind Vorrichtungen bzw. Rückschlagventile aus der DE-Patentanmeldung 10 2004 006 632 A1 der Anmelderin bekannt. Diese Patentanmeldung befasst sich mit Maßnahmen zur Verhinderung der Bildung von Rückständen eines zu transportierenden Mediums im Ventilbereich. Hintergrund ist der Einsatz derartiger Ventile in Bereichen, in denen es auf eine größtmögliche Sauberkeit bzw. Reinheit ankommt, beispielsweise beim Einsatz im Pharma- und/oder Lebensmittelbereich.

Die Aufgabe der vorliegenden Erfindung besteht darin, die vorstehend genannten Vorrichtungen weiterzuentwickeln, insbesondere im Hinblick auf eine verbesserte oder alternative Vermeidung und/oder Entfernung von Rückständen.

Zur Lösung dieser Aufgabe ist eine erfindungsgemäße Vorrichtung gemäß Anspruch 1 dadurch gekennzeichnet, dass in der Vorderseite des Stützbereichs kreisbogenförmige Vertiefungen angeordnet sind, wobei benachbarte Vertiefungen mit Abstand zueinander enden zur Schaffung von Auflagern für eine Ventilfeder, und der Stützbereich im Wesentlichen ringförmig um die Bohrung herum ausgebildet ist, wobei die kreisförmigen Vertiefungen im Stützbereich radial und mit Abstand zu freien seitlichen Rändern des Stützbereichs angeordnet sind. Es hat sich überraschend gezeigt, dass sich Rückstände auch in diesen Bereichen ablagern. Eine Einbeziehung dieser Bereiche in die Überlegungen zur Ausbildung von rückstandsarmen Ventilen führt daher zur Lösung der Aufgabe. Auf diese Weise liegt die Ventilfeder nicht "flächig" sondern lediglich punktweise auf. Die Anmelderin hat erkannt, dass sich Rückstände auch in den Anlagebereichen der Ventilfeder an der Halteplatte bilden, sodass die Verringerung der Anlagebereiche bzw. - flächen zu einer Verbesserung führt.

Bei dem Medium kann es sich sowohl um das eigentliche in der Rohrleitung zu transportierende Medium handeln, als auch um ein Spülmedium, mit dem das Ventil gereinigt wird.

In einer bevorzugten Weiterentwicklung der Erfindung ist vorgesehen, dass die entgegen der Durchflussrichtung weisende Vorderseite der Halteplatte schräg zur Durchflussrichtung geneigt ausgebildet ist, derart, dass das Medium in Richtung der zentralen Bohrung ableitbar ist.

Eine zweite Weiterbildung der Erfindung, die auch als zusätzliche Maßnahme in Verbindung mit der vorstehenden Weiterbildungen verwirklicht sein kann, sieht vor, dass der Ventilschaft wenigstens in einem Lagerbereich wenigstens eine vorzugsweise spiralförmig umlaufende Vertiefung in Durchflussrichtung aufweist zur Vermeidung von Rückständen in der Bohrung.

Eine dritte Weiterbildung der Erfindung, die auch als zusätzliche Maßnahme in Verbindung mit einer oder mehreren der vorstehenden Weiterbildungen verwirklicht sein kann, sieht vor, dass in einem Lagerbereich der Ventilfeder an einer Rückseite des Ventiltellers eine im Wesentlichen umlaufende Vertiefung ausgebildet ist, die mit voneinander beabstandeten Unterbrechungen als Auflager für die Halteplatte versehen ist.

Eine vierte Weiterbildung der Erfindung, die auch als zusätzliche Maßnahme in Verbindung mit einer oder mehreren der vorstehenden Weiterbildungen verwirklicht sein kann, sieht vor, dass die Bohrung zur Führung des Ventilschafts im Wesentlichen eine Querschnittsform aufweist, die dem Querschnitt des Ventilschafts entspricht, wobei insbesondere über den Umfang der Bohrung verteilt vorzugsweise mehrere Ausbuchtungen vorgesehen sind, die in Durchflussrichtung des Mediums verlaufen zur Vermeidung von Rückständen in der Bohrung.

Jede der vorstehenden Maßnahmen trägt für sich und/oder in Kombination mit einer oder mehreren der anderen Maßnahmen dazu bei, dass die Ablagerung von Rückständen verringert wird, nämlich im Bereich der Bohrung und an den Auflagepunkten der Ventilfeder. Es wurde erstmalig erkannt, dass die vorstehend aufgeführten Mittel zur Vermeidung von Rückständen dazu beitragen, Ablagerungen des Mediums wenigstens entgegenzuwirken, weil die kritischen Bereiche mittels der gezielt angeordneten Vertiefungen "durchgespült" werden.

Vorzugsweise ist vorgesehen, dass wenigstens einige Vertiefungen in Richtung der zentralen Bohrung geneigt ausgebildet sind. Auf diese Weise wird dazu beigetragen, dass das Medium durch die Strömung und/oder Schwerkraft in Richtung der Bohrung abgeführt wird.

Vorzugsweise ist vorgesehen, dass Vertiefungen in der Vorderseite der Stege ausgebildet sind, die in Richtung der Bohrung führen. Wenigstens einige Vertiefungen im Stützbereich sollten in diese Vertiefungen in den Stegen münden, um das Medium in Richtung der Bohrung abzuleiten und die Bildung von Rückständen zu vermeiden.

In einer bevorzugten Ausführungsform der Erfindung ist vorgesehen, dass die Vertiefungen als eingeformte und/oder eingefräste Nuten ausgebildet sind.

Weitere Einzelheiten der Erfindung ergeben sich aus den Unteransprüchen und der Beschreibung im Übrigen.

Ein bevorzugtes Ausführungsbeispiel der Erfindung wird nachfolgend anhand der Zeichnung beschrieben. In dieser zeigen:
- Fig. 1: ein Vertikalschnitt durch ein Rückschlagventil in geschlossener Stellung,
- Fig. 2: das Rückschlagventil gemäß Fig. 1 in geöffneter Stellung in analoger Darstellung,
- Fig. 3: eine Vorderseite einer Halteplatte des Ventils gemäß Fig. 1,
- Fig. 4: ein Schnitt durch die Halteplatte gemäß Fig. 3 entlang Schnittlinie A - A,
- Fig. 5: ein Schnitt durch die Halteplatte gemäß Fig. 3 entlang Schnittlinie B - B,
- Fig. 6: ein Schnitt durch die Halteplatte gemäß Fig. 3 entlang Schnittlinie C - C,
- Fig. 7: ein Schnitt durch die Halteplatte gemäß Fig. 3 entlang der Schnittlinie D - D,

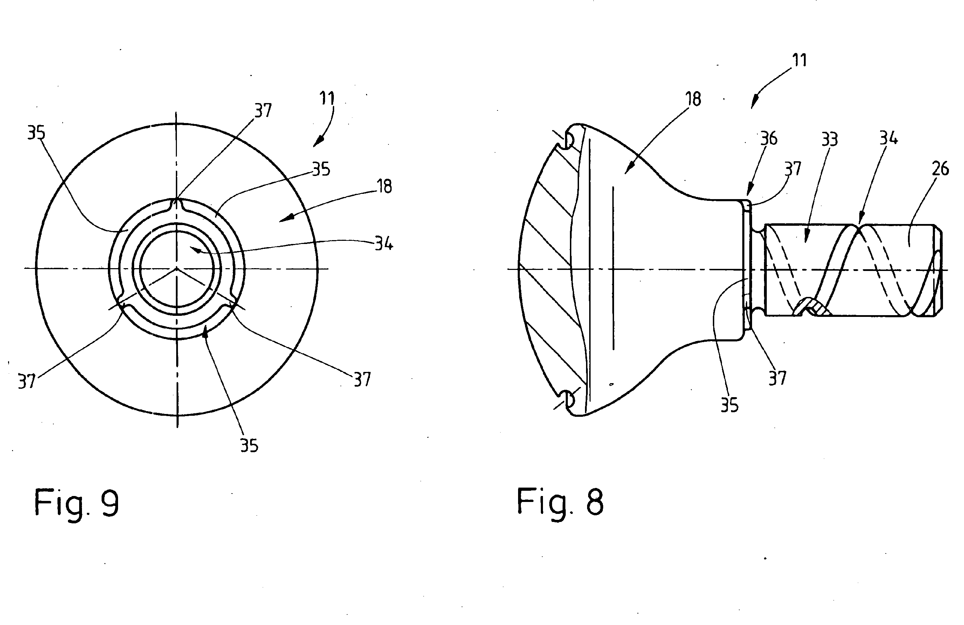

- Fig. 8: eine schematische Darstellung eines Ventiltellers in einer Seitenansicht, und
- Fig. 9: der Ventilteller gemäß Fig. 8 in Draufsicht.

Die Figuren zeigen ein Rückschlagventil 10. Das Rückschlagventil 10 kann in eine nicht dargestellte Rohrleitung eingebaut werden. Das Rückschlagventil 10 kann wie dargestellt in einer horizontal gerichteten Lage angeordnet sein. Alternativ kommt auch eine schräg oder vertikale Ausrichtung des Rückschlagsventils 10 in Frage. Statt in Rohrleitungen kann das Rückschlagventil 10 auch in andere medienführende Leitungen eingebaut werden, beispieisweise Schläuche, Kanäle oder dergleichen. Bei den zu transportierenden Medien kommen sowohl gasförmige als auch flüssige Medien in Betracht.

Das Rückschlagventil 10 verfügt über ein im Querschnitt im Wesentlich rotationssymmetrisches Gehäuse 12, in dem ein zentraler Durchflusskanal 13 ausgebildet ist, der durch Wandungen 14 des Gehäuses 12 begrenzt wird. Der Durchflusskanal 13 durchsetzt das Gehäuse 12 von einer Einlassöffnung 15 bis zu einer Auslassöffnung 16, die jeweils randseitig angeordnet sind. Die Einlassöffnung 15 und die Auslassöffnung 16 sind im Querschnitt kreisförmig ausgebildet. Der freie Querschnitt des Durchflusskanals 13 variiert über die durchströmte Länge des Gehäuses 12, wobei im Bereich einer Verengung ein Ventilsitz 17 ausgebildet ist, der durch ein Absperrmittel, nämlich einen Ventilteller 18, abdichtend verschließbar ist.

Ausgehend vom Ventilsitz 17 erweitert sich der Querschnitt des Durchflusskanals 13 jeweils in Richtung der Einlassöffnung 15 und der Auslassöffnung 16. Der Verlauf der Wandungen 14 des Durchflusskanals 13 ist dabei derart ausgebildet, dass keine Vertiefungen gebildet sind, in denen das die Rohrleitung durchströmende Medium bei Absperrung des Durchflusses Rückstande bilden kann. Auf diese Weise werden derartige Rückstände auch bei horizontalem Einbau des Rückschlagventils 10 vermieden. Es wird sichergestellt, dass bei abdichtender Anlage des Ventiltellers 18 an den Wandungen 14 des Durchflusskanals, 13 im Bereich des Ventilsitzes 17 vorzugsweise keine Ablagerungen des Mediums an den Wandungen 14 entstehen können. Bei den vorstehend genannten Vertiefungen kann es sich um in den Wandungen 14 ausgebildete Mulden, Versätze oder dergleichen handeln.

Weitere Einzelheiten der Geometrie des Gehäuses 12 können der DE-Patentanmeldung 10 2004 006 632.9 der Anmelderin entnommen werden, auf die zum Zwecke der vollständigen Offenbarung der Erfindung Bezug genommen wird.

Der Ventilteller 18 ist in Durchflussrichtung verschieblich in einem Haltemittel, nämlich einer Halteplatte 19 gelagert. Die Halteplatte 19 ist im Querschnitt entsprechend der Querschnittsform des Durchflusskanals 13 ausgebildet, nämlich kreisförmig. Die Halteplatte 19 besteht aus einem äußeren Montagebereich 20 und einem inneren Stützbereich 21, die über Stege 22 miteinander verbunden sind. Der äußere Montagebereich 20 ist ringförmig ausgebildet und findet vorzugsweise vollständig in einer im Gehäuse 12 ausgebildeten Ausnehmung 23 eine Aufnahme. Die Ausnehmung 23 entspricht im Wesentlichen den Abmessungen des Montagebereichs 20 und ist randseitig benachbart der Auslassöffnung 16 umlaufend im Gehäuse ausgebildet. Die Ausnehmung 23 ist derart bemessen, dass die Halteplatte 19 durch Presssitz oder Spielpassung am Gehäuse 12 befestigt werden kann. Die Ausnehmung 23 ist zudem derart ausgebildet, dass zum Durchflusskanal 13 gerichtete Wandungen 24 des Montagebereichs 20 im Wesentlichen bündig mit benachbarten Wandungen 14 des Durchflusskanals 13 bzw. der Rohrleitungen verlaufen.

Der innere Stützbereich 21 dient zur Lagerung bzw. Führung des Ventiltellers 18. Hierzu ist im Stützbereich 21 eine mittige Bohrung 25 vorgesehen, durch die sich ein entsprechender, mit dem Ventilteller 18 verbundener Ventilschaft 26 hindurch erstreckt. Der Stützbereich 21 dient weiterhin als Lager für ein Federmittel, nämlich eine entgegen der Durchflussrichtung vorgespannte Ventilfeder 27, die den Ventilteller 18 entgegen der Durchflussrichtung zur abdichtenden Anlage am Ventilsitz 17 bewegt und/oder führt. Der Stützbereich ist im Querschnitt etwa kreis- bzw. ringförmig ausgebildet und weist einen Durchmesser auf, der geringfügig größer als der Durchmesser des Federmittels ist.

Die Stege 22 zur Verbindung des Stützbereichs 21 mit dem Montagebereich 20 sind im gezeigten Ausführungsbeispiel radial abstehend und gegenüberliegend am Stützbereich 21 angeordnet. Im gezeigten Ausführungsbeispiel sind zwei Stege 22 vorgesehen. Selbstverständlich kann die Anzahl der Stege 22 auch variieren.

Eine Besonderheit des dargestellten Rückschlagventils 10 besteht darin, dass im Bereich des Haltemittels und des Ventils 11, bestehend aus Ventilteller 18 und Ventilschaft 26, Maßnahmen zur Vermeidung der Bildung und/oder Entfernung von Rückständen des in der Rohrleitung transportierten Mediums verwirklicht sind. Die einzelnen Maßnahmen werden nachfolgend beschrieben:
Eine erste Maßnahme besteht darin, dass in einer Vorderseite 28 des Stützbereichs 21 der Halteplatte 19 Vertiefungen 29 ausgebildet sind. Unter der Vorderseite 28 des Stützbereichs 21 bzw. anderer Organe wird im Rahmen dieser Anmeldung jeweils die Fläche verstanden, die der Einiassöffnung 15 zugewandt ist, also die Seite die entgegen der Strömungsrichtung weist. Bei den Vertiefungen 29 handelt es sich im vorliegenden Fall um ausgehend von der Vorderseite 28 eingeprägte Nuten mit im Wesentlichen halbkreisförmigen Querschnitt. Die Vertiefungen 29 können eingeprägt, eingeformt, eingefräst oder auf andere Weise hergestellt sein. Auch die Querschnittsform kann variieren.

Die Vertiefungen 29 im Stützbereich 21 erstrecken sich ringförmig um die zentrale Bohrung 25 herum. Die Vertiefungen 29 sind jedoch nicht umlaufend um die Bohrung 25 herum angeordnet, sondern enden mehrfach mit Abständen zu einander, sodass Auflager 30 als Stützbereiche für die Ventilfeder 27 geschaffen werden. Die Auflager 30 haben vergleichsweise geringe Abmessungen, sodass die Kontaktfläche zwischen Ventilfeder 27 und Stützbereich 21 möglichst gering ist, um die Ansammlung von Rückständen in diesem Bereich möglichst gering zu halten.

Ausgehend von den Vertiefungen 29 führen quergerichtete Vertiefungen 31 in die Bohrung 25 hinein. Die quergerichteten Vertiefungen 31 sind radial zum Mittelpunkt der Bohrung 25 ausgerichtet. In Verlängerung der quergerichteten Vertiefung 31 sind weitere Vertiefungen 32 in der Vorderseite 28 der Stege 22 vorgesehen. Auch diese verlaufen radial zum Mittelpunkt der Bohrung 25. Aufgabe der Vertiefungen 29, 31, 32 ist es, dass das Ventil 10 durchströmende Medium in Richtung der Bohrung 25 abzuleiten, um so einer Bildung von Rückständen im Bereich der Halteplatte 19 entgegen zu wirken. Zu diesem Zweck sind die Vertiefungen 29, 31, 32 in Richtung der zentralen Bohrung geneigt ausgebildet um das Medium dorthin zu lenken.

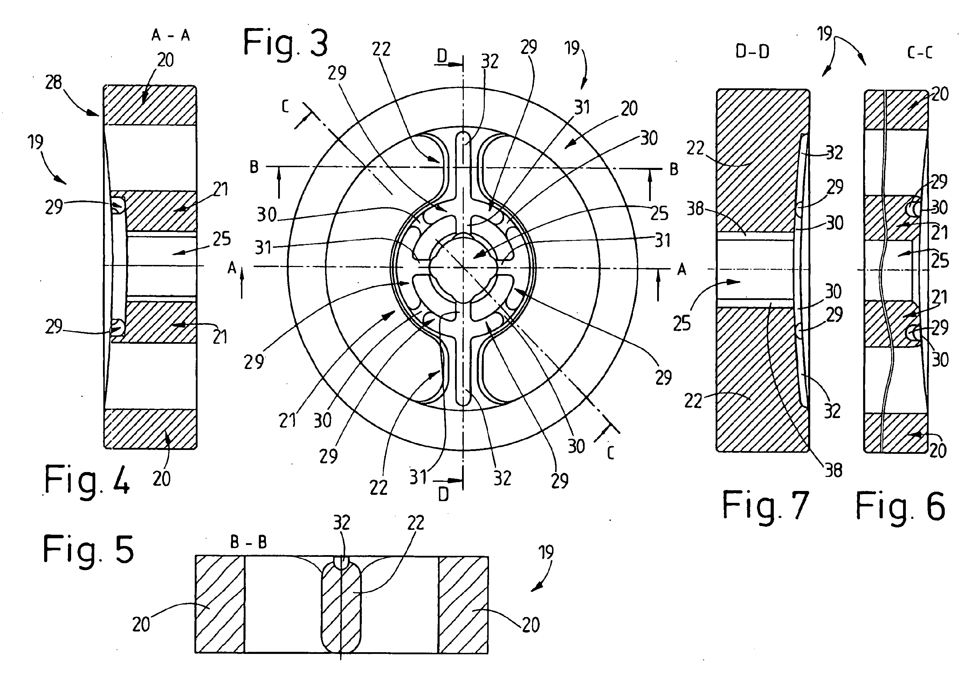

Als weitere Maßnahme ist vorgesehen, dass die gesamte Vorderseite 28 der Halteplatte 19 in Richtung der zentralen Bohrung 25 geneigt ausgebildet ist um ebenfalls auf diese Weise dafür zu sorgen, dass das Medium in Richtung der zentralen Bohrung 25 abgeleitet wird (Fig. 4).

Als Besonderheit vorgesehen ist, dass der Ventilschaft 26 mit einer Vertiefung 34 versehen ist. Die Vertiefung erstreckt sich ausgehend von einer Rückseite des Ventiltellers 18 bis an ein freies Ende des Ventilschaftes 26. Wenigstens sollte sich die Vertiefung 34 über den Bereich erstrecken, mit dem der Ventilschaft 26 in der Bohrung 25 geführt wird. Es ist also denkbar, dass nur Bereiche des Ventilschafts 26 über die Länge mit der Vertiefung 34 versehen sind. Die Vertiefung 34 selbst ist wie die vorstehend beschriebenen Vertiefungen ausgebildet. Sie erstreckt sich jedoch umlaufend um den Umfang des Ventilschafts 26 herum nämlich in Art einer außenumlaufenden Spirale. Denkbar sind auch andere geometrische Formen der Vertiefung 34.

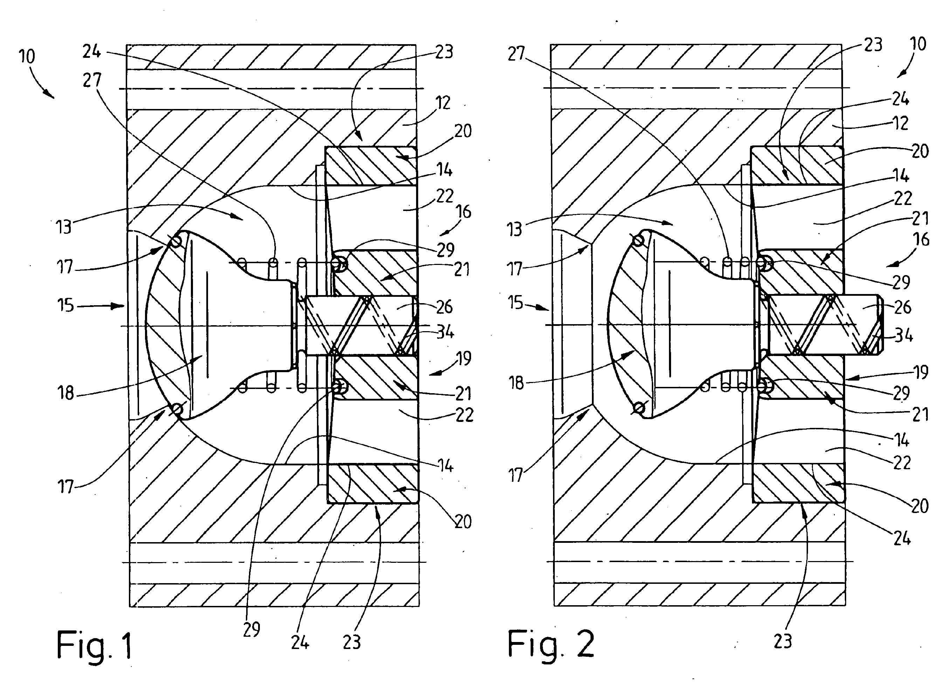

Eine weitere Vertiefung 35 ist im Bereich der Rückseite des Ventiltellers 18 vorgesehen, nämlich in dem Bereich (Lagerbereich) mit dem der Ventilteller 18 in der geöffneten Stellung gemäß Fig. 2 auf dem Stützbereich 21 der Halteplatte 19 aufliegt. Auch in diesem Fall ist die Vertiefung 35 nicht komplett umlaufend an der Rückseite des Ventiltellers 18 ausgebildet, sondern es sind Auflager 37 vorgesehen, die die Vertiefung 35 unterbrechen. Die Auflager 37 sind zudem versetzt zu den Auflagern 30 an der Vorderseite 28 der Halteplatte 19 angeordnet.

Eine weitere Besonderheit besteht darin, dass die zentrale Bohrung 25 nicht exakt die gleiche Querschnittfläche aufweist wie der Ventilschaft 26. Es sind gegenüber der kreisförmigen Querschnittsfläche der Bohrung 25 vorstehende Ausbuchtungen 38 vorgesehen, die sich gradlinig über die gesamte Länge der Bohrung 25 erstrecken. Zudem münden die quergerichteten Vertiefungen 31 in diesen Ausbuchtungen 38. Die Ausbuchtungen 38 sind daher entsprechend im Mündungsbereich der Vertiefungen 31 ausgebildet.

Das vorstehend beschriebene Rückschlagventil 10 funktioniert wie folgt: bei geschlossenem Rückschlagventil 10 (Fig. 1) liegt der Ventilteller 18 im Bereich der Ventilsitze 17 an und verschließt die Einlassöffnung 15. Bei geöffnetem Ventil (Fig. 2) kann das in der Rohrleitung zu transportierende Medium durch die Einlassöffnung 15 in das Gehäuse 12 eintreten und den Durchflusskanal 13 durchströmen. Das Medium strömt dabei um den Ventilteller 18 herum und im Wesentlichen durch die freien Bereiche der Halteplatte 19 hindurch in Richtung Auslassöffnung 16. Es wurde erkannt, dass aber ein Teil des Mediums in den Bereich der Rückseite des Ventiltellers 18 und in den Bereich der zentralen Bohrung 25 im Stützbereich 21 der Halteplatte 19 gelangt. Ausgehend von dieser Erkenntnis dienen die Vertiefungen 34 am Ventilschaft 26 und die Ausbuchtungen 38 in der Bohrung 25 dazu dem Medium die Durchströmung der Bohrung 25 zu erleichtern. Die übrigen Vertiefungen haben im Wesentlichen den Zweck die Reinigung des Rückschlagventils 10 zu erleichtern. Bei der Reinigung wird die Rohrleitung und somit das Rückschlagventil 10 von einem Reinigungsmedium durchströmt, um Rückstände des zuvor transportierten Mediums zu entfernen. Dabei wird das Rückschlagventil 10 quasi "durchgespült". Bei diesem Vorgang kommt den Vertiefungen 29, 31, 32 auch die Aufgabe zu, das Medium in Richtung der Bohrung 25 zu leiten. Durch die kleinen Auflagen 30, 37 für die Ventilfeder 27 und die Halteplatte 19 wird zudem dafür gesorgt, dass diese Organe eine relativ geringe direkte Auflagefläche am Ventilteller 18 aufweisen, sodass sich in diesen Bereichen so wenig wie möglich Rückstände ansammeln.

### Bezugszeichenliste

- 10: Rückschlagventil
- 11: Ventil
- 12: Gehäuse
- 13: Durchflusskanal
- 14: Wandung
- 15: Einlassöffnung
- 16: Auslassöffnung
- 17: Ventilsitz
- 18: Ventilteller
- 19: Halteplatte
- 20: Montagebereich
- 21: Stützbereich
- 22: Steg
- 23: Ausnehmung
- 24: Wandung
- 25: Bohrung
- 26: Ventilschaft
- 27: Ventilfeder
- 28: Vorderseite
- 29: kreisförmige Vertiefung auf der vorderseite der Halteplatte
- 30: Auflager
- 31: quergarichtete Vertiefung auf der vorderseite der Halteplatte
- 32: Vertiefung am Steg auf der vorderseite der Halteplatte
- 34: Vertiefung am Ventilschaft
- 35 36: Vertiefung an der Rüchseite des Ventiltellers Bereich
- 37: Auflager
- 38: Ausbuchtung

## Patentansprüche

1. Vorrichtung zum Sperren des Durchflusses in Rohrleitungen, Schläuchen oder dergleichen, insbesondere Rückschlagventil (10), mit einem Gehäuse (12) zum Einbau in eine Rohrleitung oder dergleichen, wobei das Gehäuse (12) einen Durchflusskanal (13) aufweist, dessen durchströmter Querschnitt durch ein Ventil (11) verschließbar ist, wobei das Ventil (11) einen Ventilteller (18) zum Verschließen des Querschnitts und einen Ventilschaft (26) zur Führung des Ventils (11) aufweist und wobei das Ventil (11) mittels des Ventilschafts (26) in einer Halteplatte (19), verschieblich in Strömungsrichtung gelagert ist, und die Halteplatte und/oder das Ventil (11) Mittel zur Vermeidung von Rückständen eines in der Rohrleitung transportierten Mediums aufweist, wobei der Ventilschaft (26) in einer vorzugsweise zentralen Bohrung (25) in der Halteplatte (19) verschieblich gelagert ist, wobei auf einer entgegen der Durchflussrichtung weisenden Vorderseite (28) der Halteplatte (19) wenigstens eine Vertiefung (29, 31, 32) zur Verhinderung von Rückständen derart ausgebildet ist, dass das Medium über die Vertiefungen (29, 31, 32) in Richtung der zentralen Bohrung (25) ableitbar ist, und die Halteplatte (19) einen äußeren Montagebereich (20) und einen inneren die Bohrung (25) aufweisenden Stützbereich (21) aufweist, wobei der Montagebereich (20) und der Stützbereich (21) durch Stege (22) miteinander verbunden sind und wobei die Vertiefungen (29, 31, 32) im Bereich der Vorderseite (28) der Stege (22) und/oder des Stützbereichs (21) ausgebildet sind und in den Bereich der Bohrung (25) führen, **dadurch gekennzeichnet, dass** in der Vorderseite (28) des Stützbereichs (21) kreisbogenförmige Vertiefungen (29) angeordnet sind, wobei benachbarte Vertiefungen (29) mit Abstand zueinander enden zur Schaffung von Auflagern (30) für eine Ventilfeder (27), und der Stützbereich (21) im Wesentlichen ringförmig um die Bohrung (25) herum ausgebildet ist, wobei die kreisförmigen Vertiefungen (29) im Stützbereich (21) radial und mit Abstand zu freien seitlichen Rändern des Stützbereichs (21) angeordnet sind.

2. Vorrichtung nach Anspruch 1, **dadurch gekennzeichnet, dass** die entgegen der Durchflussrichtung weisende Vorderseite (28) der Halteplatte (19) schräg zur Durchflussrichtung geneigt ausgebildet ist, derart, dass das Medium in Richtung der zentralen Bohrung (25) ableitbar ist.

3. Vorrichtung nach einem der Ansprüche 1 oder 2, **dadurch gekennzeichnet, dass** der Ventilschaft (26) wenigstens in einem Lagerbereich wenigstens eine vorzugsweise spiralförmig umlaufende Vertiefung (34) in Durchflussrichtung aufweist zur Vermeidung von Rückständen in der Bohrung.

4. Vorrichtung nach einem der Ansprüche 1 bis 3, **dadurch gekennzeichnet, dass** in einem Lagerbereich der Ventilfeder (27) an einer Rückseite des Ventiltellers (18) eine im Wesentlichen umlaufende Vertiefung (35) ausgebildet ist, die mit voneinander beabstandeten Unterbrechungen als Auflager (37) für die Halteplatte (18) versehen ist.

5. Vorrichtung nach einem der Ansprüche 1 bis 4, **dadurch gekennzeichnet, dass** die Bohrung (25) im Wesentlichen eine Querschnittsform aufweist, die dem Querschnitt des Ventilschafts (26) entspricht, wobei insbesondere über den Umfang der Bohrung (25) verteilt vorzugsweise mehrere Ausbuchtungen (38) vorgesehen sind, die in Durchflussrichtung des Mediums verlaufen zur Vermeidung von Rückständen in der Bohrung (25).

6. Vorrichtung nach Anspruch 1, **dadurch gekennzeichnet, dass** wenigstens einige Vertiefungen (29, 31, 32) auf der vorderseite (28) der Halteplatte (19) in Richtung der zentralen Bohrung (25) geneigt ausgebildet sind.

7. Vorrichtung nach einem der vorhergehenden Ansprüche, **dadurch gekennzeichnet, dass** ein Übergangsbereich von der Vorderseite (28) der Halteplatte (19) zur Bohrung (25) in Durchflussrichtung geneigt ausgebildet ist.

8. Vorrichtung nach Anspruch 1 oder einem der weiteren vorhergehenden Ansprüche, **dadurch gekennzeichnet, dass** Vertiefungen (32) in der Vorderseite (28) der Stege (22) ausgebildet sind, die in Richtung der Bohrung (25) führen, wobei insbesondere wenigstens einige kreisförmige Vertiefungen (29) im Stützbereich (21) in die Vertiefungen (32) in den Stegen (22) münden.

9. Vorrichtung nach Anspruch 8, **dadurch gekennzeichnet, dass** die kreis Förmigen Vertiefungen (29) im Stützbereich (21), die nicht in die Vertiefungen (32) in den Stegen (22) münden, in quergerichtete Vertiefungen (31) münden, die in die Bohrung (25) führen.

10. Vorrichtung nach Anspruch 3, **dadurch gekennzeichnet, dass** die Vertiefung (34) am Ventilschaft sich ausgehend von einer Rückseite des Ventiltellers (18) durchgehend bis an das Ende des Lagerbereichs erstreckt.

11. Vorrichtung nach Anspruch 4, **dadurch gekennzeichnet, dass** die Auflager (37) gleichmäßig über den Umfang der Vertiefung (35) an der Rückseite des Ventiltellers verteilt angeordnet sind.

12. Vorrichtung nach Anspruch 4, **dadurch gekennzeichnet, dass** der Lagerbereich im Übergang von der Rückseite des Ventiltellers (18) zum Ventilschaft (26) ausgebildet ist.

## Claims

1. A device for shutting off the flow in pipelines, hoses or the like, in particular a non-return valve (10), comprising a housing (12) for installing in a pipeline or the like, the housing (12) having a flow channel (13), of which the flowed-through cross section can be closed by a valve (11), the valve (11) having a valve disc (18) for closing the cross section and a valve stem (26) for guiding the valve (11) and the valve (11) being mounted by means of the valve stem (26) in a retaining plate (19) so as to be displaceable in the direction of flow, the retaining plate and/or the valve (11) having means for avoiding residues of a medium transported in the pipeline, with the valve stem (26) being displaceably mounted in a preferably central bore (25) in the retaining plate (19), at least one recess (29, 31, 32) being formed on a front (28) of the retaining plate (19) that points counter to the direction of flow to prevent residues in such a way that the medium can be discharged via the recesses (29, 31, 32) in the direction of the central bore (25), the retaining plate (19) having an outer assembly region (20) and an inner support region (21) including the bore (25), the assembly region (20) and the support region (21) being joined together by webs (22) and the recesses (29, 31, 32) being formed in the region of the front (28) of the webs (22) and/or of the support region (21) and leading into the region of the bore (25), **characterized in that** arc of a circle-shaped recesses (29) are arranged in the front (28) of the support region (21), adjacent recesses (29) ending set apart from one another so as to create bearings (30) for a valve spring (27), and the support region (21) is formed so as to be substantially annular around the bore (25), the circular recesses (29) being arranged radially in the support region (21) and set apart from free lateral edges of the support region (21).

2. The device as claimed in claim 1, **characterized in that** the front (28) of the retaining plate (19) that points counter to the direction of flow is inclined obliquely to the direction of flow in such a way that the medium can be discharged in the direction of the central bore (25).

3. The device as claimed in one of claims 1 or 2, **characterized in that** the valve stem (26) has, at least in a bearing region, at least one preferably spirally continuous recess (34) in the direction of flow to avoid residues in the bore.

4. The device as claimed in one of claims 1 to 3, **characterized in that** a substantially circumferential recess (35), which is provided with mutually set-apart breaks as bearings (37) for the retaining plate (18), is formed in a bearing region of the valve spring (27) on a back of the valve disc (18).

5. The device as claimed in one of claims 1 to 4, **characterized in that** the bore (25) has substantially a cross-sectional shape corresponding to the cross section of the valve stem (26), a plurality of protrusions (38), which run in the direction of flow of the medium to avoid residues in the bore (25), preferably being provided, in particular distributed over the circumference of the bore (25).

6. The device as claimed in claim 1, **characterized in that** at least certain recesses (29, 31, 32) on the front (28) of the retaining plate (19) are inclined in the direction of the central bore (25).

7. The device as claimed in one of the preceding claims, **characterized in that** a region of transition from the front (28) of the retaining plate (19) to the bore (25) is inclined in the direction of flow.

8. The device as claimed in claim 1 or one of the further preceding claims, **characterized in that** recesses (32) leading in the direction of the bore (25) are formed in the front (28) of the webs (22), in particular with at least certain circular recesses (29) in the support region (21) opening into the recesses (32) in the webs (22).

9. The device as claimed in claim 8, **characterized in that** the circular recesses (29) in the support region (21), which do not open into the recesses (32) in the webs (22), open into transversely directed recesses (31) leading into the bore (25).

10. The device as claimed in claim 3, **characterized in that** the recess (34) on the valve stem extends, starting from a back of the valve disc (18), continuously up to the end of the bearing region.

11. The device as claimed in claim 4, **characterized in that** the bearings (37) are distributed in a uniform arrangement about the circumference of the recess (35) at the back of the disc valve.

12. The device as claimed in claim 4, **characterized in that** the bearing region is formed at the point of transition from the back of the valve disc (18) to the valve stem (26).

## Revendications

1. Dispositif pour bloquer l'écoulement dans des conduites tubulaires, des tuyaux ou similaires, notamment soupape antiretour (10), comprenant un boîtier (12) destiné à être installé dans une conduite tubulaire ou similaire, le boîtier (12) présentant un canal d'écoulement (13) dont la section transversale parcourue par l'écoulement peut être fermée par une soupape (11), la soupape (11) présentant un plateau de soupape (18) pour fermer la section transversale et une tige de soupape (26) pour guider la soupape (11) et la soupape (11) étant montée de manière déplaçable dans la direction de l'écoulement au moyen de la tige de soupape (26) dans une plaque de retenue (19), et la plaque de retenue et/ou la soupape (11) présentant des moyens pour éviter des résidus d'un fluide transporté dans la conduite tubulaire, la tige de soupape (26) étant montée de manière déplaçable dans un alésage de préférence central (25) dans la plaque de retenue (19), au moins un renfoncement (29, 31, 32) étant réalisé pour éviter des résidus sur un côté avant (28) de la plaque de retenue (19) tourné à l'encontre de la direction d'écoulement, de telle sorte que le fluide puisse être dévié par le biais des renfoncements (29, 31, 32) dans la direction de l'alésage central (25), et la plaque de retenue (19) présentant une région de montage extérieure (20) et une région de support intérieure (21) présentant l'alésage (25), la région de montage (20) et la région de support (21) étant connectées l'une à l'autre par des nervures (22), et les renfoncements (29, 31, 32) étant réalisés dans la région du côté avant (28) des nervures (22) et/ou de la région de support (21) et conduisant dans la région de l'alésage (25), **caractérisé en ce que** des renfoncements en forme d'arc de cercle (29) sont disposés dans le côté avant (28) de la région de support (21), des renfoncements adjacents (29) se terminant à distance les uns des autres pour créer des appuis (30) pour un ressort de soupape (27), et la région de support (21) étant réalisée essentiellement sous forme annulaire tout autour de l'alésage (25), les renfoncements de forme circulaire (29) étant disposés dans la région de support (21) radialement et à distance de bords latéraux libres de la région de support (21).

2. Dispositif selon la revendication 1, **caractérisé en ce que** le côté avant (28) de la plaque de retenue (19) tourné à l'encontre de la direction d'écoulement est réalisé de manière inclinée obliquement par rapport à la direction de l'écoulement de telle sorte que le fluide puisse être dévié dans la direction de l'alésage central (25).

3. Dispositif selon l'une quelconque des revendications 1 ou 2, **caractérisé en ce que** la tige de soupape (26) présente au moins dans une région de palier au moins un renfoncement périphérique de préférence en forme de spirale (34) dans la direction de l'écoulement, pour éviter des résidus dans l'alésage.

4. Dispositif selon l'une quelconque des revendications 1 à 3, **caractérisé en ce qu'**un renfoncement essentiellement périphérique (35) est réalisé dans une région de palier du ressort de soupape (27) au niveau d'un côté arrière du plateau de soupape (18), lequel renfoncement est pourvu d'interruptions espacées les unes des autres servant d'appui (37) pour la plaque de retenue (18).

5. Dispositif selon l'une quelconque des revendications 1 à 4, **caractérisé en ce que** l'alésage (25) présente essentiellement une forme en section transversale qui correspond à la section transversale de la tige de soupape (26), plusieurs renflements (38), répartis sur la périphérie de l'alésage (25) étant de préférence prévus et s'étendant dans la direction d'écoulement du fluide pour éviter des résidus dans l'alésage (25).

6. Dispositif selon la revendication 1, **caractérisé en ce que** qu'au moins certains renfoncements (29, 31, 32) sont réalisés sur le côté avant (28) de la plaque de retenue (19) de manière inclinée dans la direction de l'alésage central (25).

7. Dispositif selon l'une quelconque des revendications précédentes, **caractérisé en ce qu'**une région de transition entre le côté avant (28) de la plaque de retenue (19) et l'alésage (25) est réalisée sous forme inclinée dans la direction de l'écoulement.

8. Dispositif selon la revendication 1 ou l'une quelconque des autres revendications précédentes, **caractérisé en ce que** des renfoncements (32) sont réalisés dans le côté avant (28) des nervures (22), lesquels conduisent dans la direction de l'alésage (25), notamment au moins certains renfoncements de forme circulaire (29) débouchant dans la région de support (21) dans les renfoncements (32) dans les nervures (22).

9. Dispositif selon la revendication 8, **caractérisé en ce que** les renfoncements de forme circulaire (29) dans la région de support (21), qui ne débouchent pas dans les renfoncements (32) dans les nervures (22), débouchent dans des renfoncements orientés transversalement (31), qui conduisent dans l'alésage (25).

10. Dispositif selon la revendication 3, **caractérisé en ce que** le renfoncement (34) sur la tige de soupape s'étend depuis un côté arrière du plateau de soupape (18) en continu jusqu'à l'extrémité de la région de palier.

11. Dispositif selon la revendication 4, **caractérisé en ce que** les appuis (37) sont répartis uniformément sur la périphérie du renfoncement (35) au niveau du côté arrière du plateau de soupape.

12. Dispositif selon la revendication 4, **caractérisé en ce que** la région de palier est réalisée dans la transition entre le côté arrière du plateau de soupape (18) et la tige de soupape (26).
